# EUROPEAN PATENT APPLICATION

(11) **EP 2 175 051 A1**
(43) Date of publication of application: **14.04.2010**
(21) Application number: 09171975.7
(22) Date of filing: 01.10.2009
(51) Int. Cl.: C25B 1/08, C25B 9/20, C25B 11/04, C25B 11/12, C25B 15/00

(54) **Hydrogen-oxygen electrolyzing device and carbon paper electrodes thereof with material-changed outer surfaces**

(30) Priority: 09.10.2008 TW 97139001
(71) Applicant: Troika International Co. Ltd., Songshan District Taipei City 105 (TW); Chang, Chao, Nuannuan District Keelung City 205 (TW); Bih, Chung-Ho, Songshan Dist. Taipei City 105 (TW)
(72) Inventor: CHANG, Chao, 205, Keelung City (TW)
(74) Representative: Dokter, Eric-Michael

(57) **Abstract**

A hydrogen-oxygen electrolyzing device for generating hydrogen and oxygen with electrolytic solution comprises a first container providing a receiving trough for containing the electrolyte, and at least an electrolyzing structure; the electrolyzing structure further comprises: at least a serial cell being disposed in the receiving trough and further comprising a plurality of electrodes with a gap between every two neighboring electrodes, a first conductor and a second conductor; the first and second conductors electrically connect with the two outermost electrodes; **characterized in that** each of the electrodes is a carbon paper electrode with both outer surfaces thereof being changed in material; the carbon paper electrode further comprises: a carbon paper substrate having a first surface and a second surface, a first metal layer being joined to the first surface, and a second metal layer being joined to the second surface.

## Description

### BACKGROUND OF THE INVENTION

### 1.Field of the Invention:

The present invention is related to a hydrogen-oxygen electrolyzing device and particularly to a hydrogen-oxygen electrolyzing device and carbon paper electrodes each thereof with material changed outer surfaces.

### 2. Brief description of related art:

The District of Energy (DOE) of United States has changed the regulation regarding the electrolyzing efficiency of the water being electrolyzed as the hydrogen and the oxygen from current 45% to 75%, and the change will be in effect since 2010. The ways to produce the hydrogen and the oxygen are versatile, but it is most environmentally protective and energy-conservative with electrolyzing. Therefore, it is an extremely important goal to cooperate with the resource of renewable energy such as the wind power plant and the solar power plant to covert the water to the hydrogen and the oxygen as the storage energy effectively.

The electrolyzing structure in the currently known hydrogen and oxygen generating apparatus mostly provides a plurality of electrodes, which are arranged as serial cells, and the outermost electrodes are subjected to the DC voltage, which is distributed as an individual divided voltage between two neighboring electrodes evenly. The preceding art was disclosed with Taiwan Utility Model No. M302490 entitled "HYDROGEN-OXYGEN APPARATUS IN A POWER DEVICE WITH MIXING FUELS".

It is noted that how the water molecules contacting with the electrodes affects the electrolyzing efficiency significantly in the process of electrolysis. The ideal electrode provide a large contact area with the water molecules, and excellent hydrophilicity and gas expelling capability for enabling the water molecules falling onto the electrode with a state of closed circuit so as to perform the electrolysis; the produced hydrogen and oxygen are capable of escaping from the surface of the electrode rapidly instead of accumulation of gas films so as to avoid the adhesions of further water molecules being impeded. If the gas films stagnantly aggregate on the surfaces of the electrode to increase the resistance of electrolyzing, the exerted external voltage has to be increased to force the current passing through the resistance layer, and it results in decreasing the electrolyzing efficiency. For instance, under a temperature condition of 25°C , the ideal value of the thermal equilibrium electrical potential energy E_{ideal} is equal to 1.48V; Taking the conventional hydrogen-oxygen electrolyzing device as an example, the stainless steel is employed as the electrode with the electrolyte being the sodium hydroxide solution/ the potassium hydroxide solution; the measured real electrolyzing divided voltage Eᵣₑₐₗ is 5.3V and the electrolyzing efficiency is 27.92%, which is 1.48V divided by 5.3V; Eᵣₑₐₗ=5.3V is higher than the ideal potential E_{ideal}=1.48V and the remainder voltage converts to the redundant heat such that the temperature of the electrolyte is increased due to being heated with the redundant heat. Hence, it becomes necessary for proper dissipation of the heat to prevent the mixture of the hydrogen and the oxygen from exploding in case of the mixture of the hydrogen and the oxygen reaching the flash point.

### SUMMARY OF THE INVENTION

The crux of the present invention is to improve the conventional hydrogen-oxygen electrolyzing device and the electrodes thereof for enhancing the electrolyzing efficiency.

The primary object of the present invention is to provide a hydrogen-oxygen electrolyzing device with the carbon paper electrodes thereof having two material changed outer surfaces respectively in which the carbon paper substrates are utilized as the electrodes due to having good properties such as the electrical conductivity, thermal conductivity, the porosity, the permeability, the hydrophicity and the hydrophobility such that the surface contacts between the water molecules and the electrodes are maximized to prevent the accumulation of the produced gases and to even the currents of the electrodes for enhancing the electrolyzing efficiency.

Another object of the present invention is to provide a hydrogen-oxygen electrolyzing device with the carbon paper electrodes thereof having two material changed outer surfaces respectively in which a pulse-width-module power supplier is utilized to stimulate the water molecules in the electrolyte with demodulation for the water molecules occurring the resonant electrolysis in the process of electrolyzing and enhancing the electrolyzing efficiency.

A further object of the present invention is to provides a hydrogen-oxygen electrolyzing device with which the supplementary electrolyte can be added automatically with the flames being prohibited to move along with the mixture of hydrogen and oxygen and ignite the mixture of hydrogen and oxygen in the receiving trough, and the operation of the electrolysis can be stopped producing the mixture of hydrogen and oxygen automatically at the time of the pressure of the mixture of hydrogen and oxygen exceeding the preset pressure.

Accordingly, a hydrogen-oxygen electrolyzing device for producing the hydrogen and the oxygen with the electrolyte according to the present invention comprises:
a first container providing a receiving trough for containing the electrolytic solution; and
at least an electrolyzing structure;
wherein the electrolyzing structure further comprises:
at least a series component being disposed in the receiving trough and further comprising a plurality of electrodes with a gap between every two neighboring electrodes;
a first conductor; and
a second conductor;
wherein the first conductor and the second conductor electrically connect with the two outermost electrodes;
**characterized in that** each electrode is a carbon paper electrode with material changed outer surfaces, and further comprises:
a carbon paper substrate having a first surface and a second surface;
a first metal layer being joined to the first surface; and
a second metal layer being joined to the second surface.

Further, a carbon paper electrode with two material changed outer surface for a hydrogen-oxygen electrolyzing device to produce the hydrogen and the oxygen with the electrolyte according to the present invention comprises:
a carbon paper substrate having a first surface and a second surface;
a first metal layer being joined to the first surface; and
a second metal layer being joined to the second surface.

### BRIEF DESCRIPTION OF THE DRAWINGS

The present invention can be more fully understood by reference to the following description and accompanying drawings, in which:

Fig. 1 is a plan view of the first preferred embodiment of a hydrogen-oxygen electrolyzing device according to the present invention;

Fig. 2 perspective view of the first preferred embodiment of hydrogen-oxygen electrolyzing device according to the present invention;

Fig. 3 is a perspective view illustrating the first embodiment of the electrolyzing structure according to the invention;

Fig. 4 is a fragmentary sectional view of the respective electrode in the electrolyzing structure shown in Fig. 3;

Fig. 5 is a perspective view illustrating the electrode before being set up;

Fig. 6 is an exploded perspective view of the electrolyzing structure shown in Fig. 3;

Fig. 7 is a perspective view illustrating the second embodiment of the electrolyzing structure according to the invention;

Fig. 8 is a perspective view illustrating the third embodiment of the electrolyzing structure according to the invention; and

Fig. 9 is a circuit diagram illustrating the arrangement of the second preferred embodiment of a hydrogen-oxygen electrolyzing device according to the present invention.

### DETAILED DESCRIPTION OF THE INVENTION

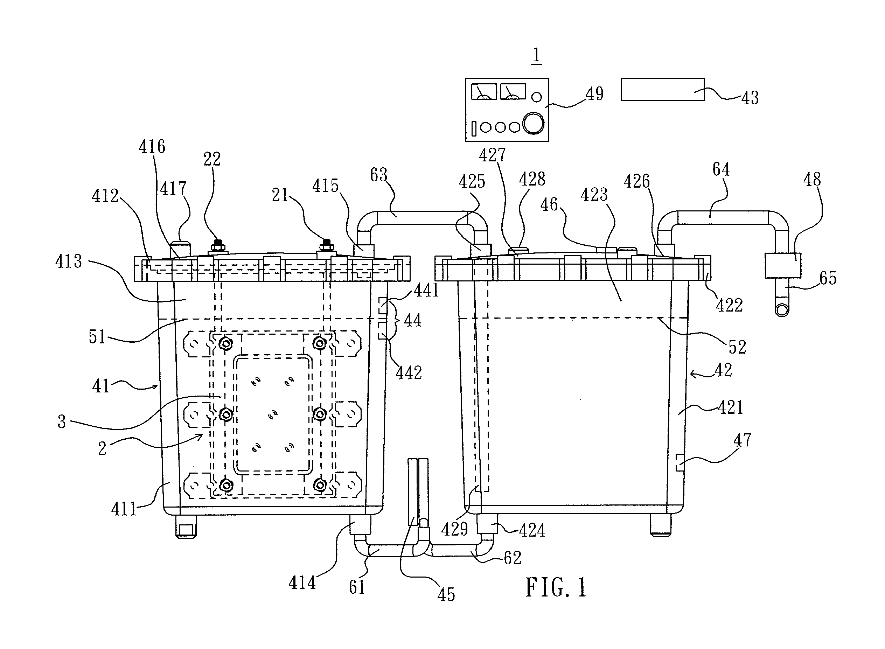

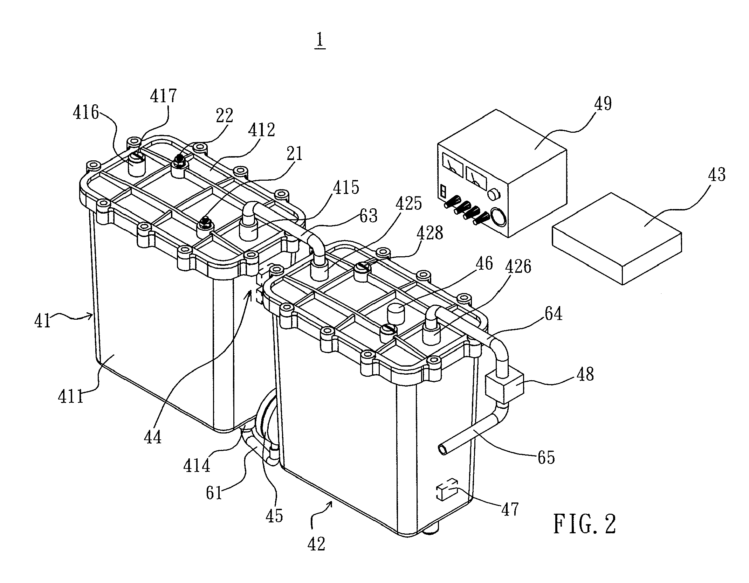

Referring to Figs. 1 and 2, the hydrogen-oxygen electrolyzing device 1 of the first embodiment according to the present invention includes an electrolyzing structure 2, a first container 41, a second container 42, a controller 43, a level sensor 44, a pump 45, a gas pressure sensor 46, a second level sensor 47, an anti back fire valve 48 and a DC power supply 49. The electrical connections are prior art and the pump 45 can be a membrane pump.

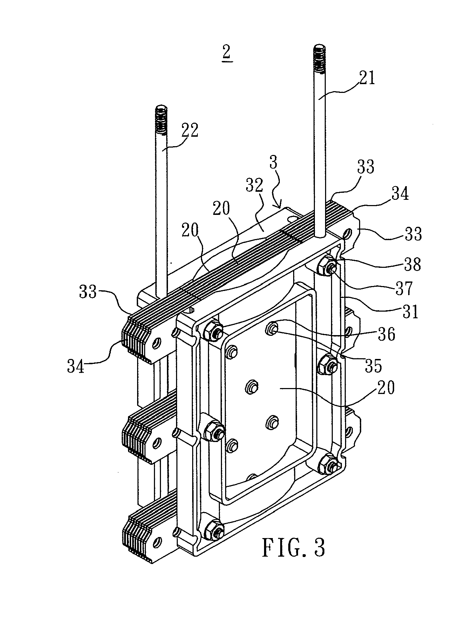

Referring to Fig. 3, the first embodiment of the electrolyzing structure 2 includes a serial cell 3, a first conductor 21 and a second conductor 22. The serial cell 3 further includes a plurality of electrodes 20, a first frame 31, a second frame 32, a plurality of metal sheets 33, a plurality of insulating sheets 34, a plurality of insulating rods 35, a plurality of insulating pads 36, a plurality of insulating bolts 37 and a plurality of insulating nuts 38.

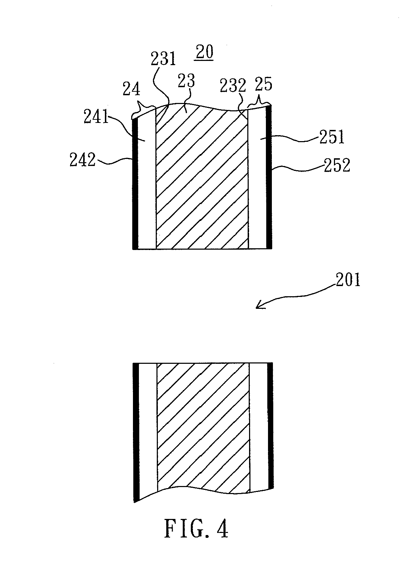

Referring to Fig. 4, each of the electrodes 20 is a carbon paper electrode with the surfaces of two sides thereof being enhanced in property respectively and provides a carbon paper substrate 23, which is the electrode substrate. The carbon paper substrate 23 is treated with electroless metal plating to activate and sensitize the surfaces in which the first surface 231 is disposed corresponding to the first metal layer 24 and the second surface 232 is disposed corresponding to the second metal layer 25 such that the first surface 231 is capable of being joined to the first metal layer 24 and the second surface 232 is capable of being joined to the second metal layer 25. Further, the first metal layer 24 has a first inner metal layer 241 and a first outer metal layer 242; the second metal layer 25 has a second inner layer 251 and a second outer layer 252. The first inner metal layer 241 is disposed between the first surface 231 and the first outer metal layer 242; the second inner metal layer 251 is disposed between the second surface 232 and the second outer metal layer 252. The respective electrode 20 has a plurality of holes 201 and each hole 201 at the same position in the respective electrode is corresponding to each other.

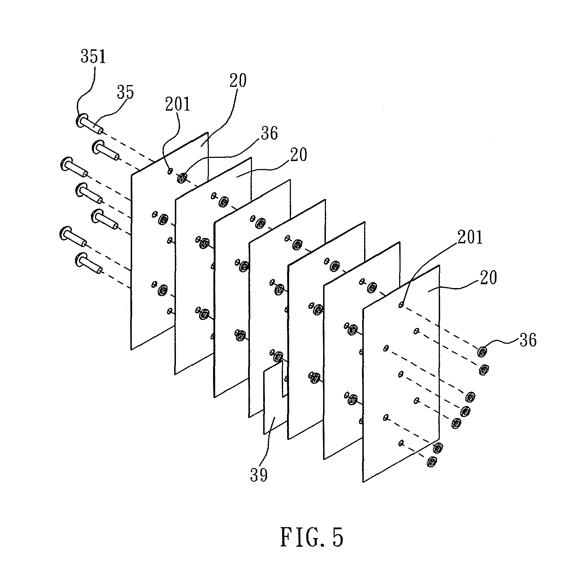

Referring to Fig. 5, the insulation rods 35 pierce the holes 201 respectively; the head part 351 of the respective insulation rod 35 press against one of the two outermost electrodes 20 and the end part of the respective insulation rod 35 passes through the another one of the outermost electrodes 20 to engage with one of the insulation pads 36. Further, one of insulation pads is disposed between two corresponding holes 201, 201 of every two neighboring electrodes the respective insulation rod 35 for each insulation rod 35 engages with the insulation pads 36 while passing through the electrodes 20 such that a constant gap can be secure between every two neighboring electrodes 20.

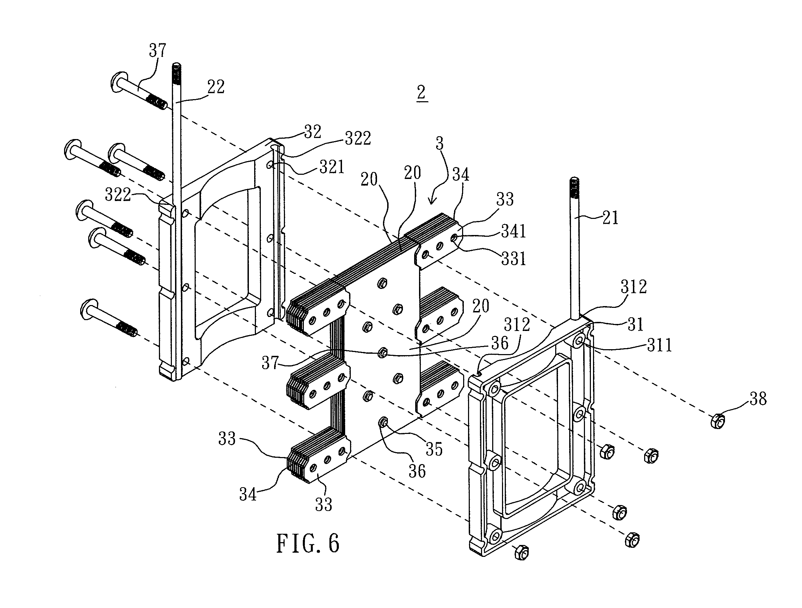

Referring to Fig. 6, the first frame 31, the second frame 32, the metal sheets 33, the metal insulation sheets 34 are provided with corresponding holes 311, 321, 331, 341; The bolts 37 pass through the holes 311, 321, 331, 341 with the screw end of the respective bolt 37 engaging with one of the insulation nuts 38 for the metal sheets 33 and the insulation sheets 34 being clamped between the first frame 31 and the second frame 32; at least one of the insulation sheets 34 is disposed between the two outermost metal sheets 33. There are six insulation sheets 34 are disposed between the two metal sheets 33 in the present embodiment. The first frame 31 and the second frame 32 each have two longitudinal grooves 312, 322 being opposite to each other. The grooves 312, 322 accommodate the first conductor 21 and the second conductor 22 respectively; The first conductor 21 contacts with the metal sheet 33 next to the first frame 31; the second conductor 22 contacts the metal sheet 33 next to the second frame 32. An end of the respective metal sheet 33 contacts with the outer lateral side of the two outermost electrodes 20; an end of the respective insulation sheet 34 is disposed between every two consecutive electrodes 20 to allow the edges of the outermost electrodes 20 are clamped between the neighboring metal sheets 33 and the insulation sheets 34; the edges of the other electrodes 20 are clamped between the neighboring insulation sheets 34. In this way, the electrodes 20 are clamped in a way of being parallel to each other.

Referring to Figs. 1 and 2 again, the first container 41 includes a first main body 411 and a first covering lid 412; the first main body 411 has a first receiving trough 413, a first liquid inlet 414; the first liquid inlet 414 is disposed at the bottom of the main body 411; the first liquid inlet 414 communicates with the first receiving trough 413; the first covering lid 412 is joined to the first main body in an airtight state such that an airtight space is formed in the first receiving trough 413; the first covering lid 412 has a first air outlet 415 and a second liquid inlet 416; the second liquid inlet 416 is sealed with a sealing member 417 normally; the sealing member 417 can be removed for the supplementary liquid being capable of being added into the first receiving trough 413. The first main body 411 provides a first level sensor 44; the first level sensor 44 includes a high level sensing unit 441 and a low level sensing unit 442 for detecting the electrolyte 51 in the first receiving trough 413. The series component 3 of the electrolyzing structure 2 is disposed in the first receiving trough 413, but the first conductor 21 and the second conductor 22 pass through the first covering lid 412 with the upper ends of the conductors 21, 22 extending beyond the top of the covering lid 412 to connect with the positive pole and the negative pole of the DC supply 49 respectively.

The second container 42 includes a second main body 421 and a second covering lid 422; the second main body 421 has a second receiving trough 423, a first liquid outlet 424; the first liquid outlet 424 communicates with the second receiving trough 423; the second covering lid 422 is joined to the second main body 421 in an airtight state such that an airtight space is formed in the second receiving trough 423; the second covering lid 422 provides a gas intake port 425, a second discharge port 426 and at least a third liquid inlet 427; the third liquid inlet 427 is sealed with a second sealing member 428 normally, and the second sealing member 428 can be removed for the supplementary liquid being added into the second receiving trough 423 via the third liquid inlet 427; the second covering lid 422 connects with an internal pipe 429; the internal pipe 429 is disposed in the second receiving trough 423 to communicate with the gas intake port 425. The second main body 421 provides a second level sensor 47 for sensing the height of the level of the supplementary liquid. The lower end of the internal pipe 429 is disposed at an elevation lower than the second level sensor 47. A first external pipe 61 is disposed with two ends thereof being joined to the first main body 411 and the pump 45 respectively for communicating with the first liquid inlet 414 and the output port of the pump 45. The second covering lid 422 is attached with a gas pressure sensor 46 for detecting the gas pressure in the second receiving trough 423. A second external pipe 62 is connected to the pump 45 and the second main body 421 with two ends thereof respectively for communicating with the entrance of the pump 45 and the first liquid outlet 424. A third external pipe 63 is connected to the first covering lid 412 and the second covering lid 422 with two ends thereof respectively for communicating with the first gas outlet 415 and the gas intake port 425. A fourth external pipe 64 is disposed to connect with the second covering lid 422 and the anti backfire valve 48 with two ends thereof respectively for communicating with the second discharge port 426 and the entrance of the anti backfire valve 48. A fifth pipe 65 is disposed with an end thereof connecting with the exit of the anti backfire valve 48.

When the positive pole and the negative pole of the DC power supplier 49 electrically connect with the first conductor 21 and the second conductor 22, the electrodes 20 of the electrolyzing structure 2 treat the electrolyte 51 with electrolysis to generate the hydrogen and the oxygen; the mixture of hydrogen and oxygen flows outward the first receiving trough 413 via the first gas outlet 415 and is guided into the supplementary liquid 52 via the third external pipe 63, the gas intake port 425 and the internal pipe 429 successively; further, the mixture of hydrogen and oxygen rises to the second receiving trough 423 above the supplementary liquid 52, and flows outward from the fifth external pipe 65 after passing through the second discharge port 426, the fourth external pipe 64, the anti backfire valve 48 and the fifth pipe 65. The controller 43 emits a control signal to stop or start the pump 45 as soon as a sensing signal sent out from the first level sensor 44 corresponding to the high liquid level or the low liquid level is detected by the controller 43 such that the pump 45 stops or force the supplementary liquid 52 to enter the first receiving trough 413 automatically for maintaining the liquid level of the electrolyte 51 within a preset range.

When the second level sensor 47 detects that the level of the supplementary liquid is lower than the preset level, a sensing signal is emitted by the second level sensor 47; when the sensing signal is received by the controller 43, a control signal is sent out by the controller to a alarm such that a sound signal with light on is emitted from the alarm to remind the user to open the second sealing member 428 and supply the supplementary liquid 52 into the second receiving trough 423 via the third liquid inlet 427. Meanwhile, the flames outside the fifth external pipe 65 are incapable of igniting the mixture of hydrogen and oxygen in the first receiving trough 413 along the moving path of mixture of the hydrogen and the oxygen.

In case of the gas pressure exceeding the preset value, the controller 43 is capable of detecting a sensing signal emitted by the gas pressure sensor and issues a control signal to the DC power supplier 49; under this circumference, the DC power supplier 49 stops outputting the voltage to the first conductor 21 and the second conductor 22, and the electrolysis of the electrodes 20 of the electrolyzing structure to the electrolyte 51 is disabled to avoid the generation of the mixture of hydrogen and oxygen.

Referring to Fig. 4 again, the carbon paper substrate 23 employed in the present invention was used as the core material of the hydrogen fuel cell assembly originally and it is called the gas diffusion layer (GDL); the carbon paper substrate 23 generally is a porous material made of stacked carbon fibers such as the carbon paper or carbon cloth, and it acts as a gas diffusion material (GDM). Because the carbon cloth and the carbon paper are porous with excellent conductivity and high porosity, it is favorable for the uniform permeating reactions of the hydrogen and the oxygen and the uniform adhesion of the produced water. The micro porous layer (MPL) at the outer sides of the carbon paper substrate mainly consists of the carbon powder with high conductivity and further includes the dispersion agent, solvent and hydrophilic/hydrophobic agent. The method for making the MPL including the following steps: the preceding components being mixed and agitated with a supersonic oscillator to form the liquid ink, the liquid ink being coated on the surface of the gas diffusion layer with the coating technology such as spraying, scraping or net printing; and being high-temperature sintered.

The GDL and the MPL play extremely important roles and functions in the hydrogen fuel cell assembly such as (1) offering the permeating passages for the reacting gases (the hydrogen and the oxygen); (2) offering the passages for the products of the reaction (the water and the heat) leaving the MPL; (3) offering the entering and leaving passages for the electrons of the electrochemical reaction; (4) acting as the catalyst of the MPL and the structural support of the proton exchange membrane. Hence, the GDL and the MPL have to provide with good conductivity, catalyzing, heat transmission, porosity, permeability and hydrophilicity.

The reaction process of the hydrogen fuel cell assembly generating the electricity by means of the hydrogen being joined to the oxygen is contrary to that of the water being electrolyzed to generate the hydrogen and the oxygen. Nevertheless, the same requirements of good electrode designs are necessary for both of the reaction processes.

Referring to Fig. 4 again, the first metal layer 24 and the second metal layer 25 are formed with a plurality of micro metal particles being coated the first surface 231 and the second surface 232 of the carbon paper substrate 23. The first surface 231 and the second surface 232 provide the same function as the MPL in the hydrogen fuel cell assembly to perform the catalytic conversion with the water by means of extremely large contact surface. The function of the catalyst is for accelerating the conversion efficiency of the positive and negative ions such that the contact area of the catalyst with the water is an extremely significant factor. The process of eletroless metal is utilized in the following steps: the carbon paper substrate 23 being cleaned and degreased with the acetone under the supersonic wave; being dipped in the tin sulfuric acid for sensitization, being activated in the palladium salt solution; the metal being reduced in the acid solution of the sodium hypophosphite to adhere to the first surface 231 and the second surface 232 of the carbon paper substrate 23. The growing thickness of the respective metal layer can be controlled with the plating parameter. The growth speed of the ordinary electroless metal film can be controlled at 1 µ m/min to form both the first inner metal layer 241 and the second inner metal layer 251 with high density and both the first outer metal layer 242 and the second outer metal layer 252 with low density. The first and second inner metal layers 241, 242 in high density are employed to increase the adhesive forces of the first and second metal layers 24, 25 while being attached to the first and second surfaces 231, 232 of the carbon paper substrate 23. The temperature and the concentration are controlled accurately such that it is capable of wrapping and forming the micro metal particles on the first and second surfaces 231, 232 of the carbon paper substrate 23. The micro metal particles are sugarcoated-haws-shaped. Because the micro metal particles have a micro diameter about 15∼30 µ m respectively, the outer surfaces thereof have fine sharp projections for reinforcing the reaction of catalytic conversion.

The water molecules are bonded with covalence and the bonding energy of the covalent bond is pretty high; the polarization can be utilized to urge the scattered water molecules to be lined up in the pulse electric field; the demodulation is utilized to allow the dissociation energies of the water molecules being capable of breaking the covalence while the polarization frequencies of the water molecules are in a state of corresponding to the modulation frequency. It is a phenomenon reaching the resonant stage and it greatly enhances the electrolyzing efficiency.

Referring to Fig. 5 in company with Figs. 1 and 3, the DC power supplier 49 can be provided with the function of the pulse width modulation (PWM) to supply the pulse type DC power to the electrodes 20. The demodulation is utilized to control the supplied power and to reach the resonant frequency (600Hz∼45KHz). Further, a plurality of flat shape piezoelectric material sheets 39 are placed at the gaps between the parallel electrodes 20. The piezoelectric material sheets such as the quartz sheets or the ceramic piezoelectric sheets are capable of forcing the mixing gas being generated from electrolyzed water molecules and moving away the electrodes 20 rapidly for promoting the capability of expelling the mixture gas and enhancing the effect of the electrolysis with the function of the oscillation.

The electrodes in the present invention are structurally arranged as serial cells such that the gross voltage supplied at the outermost electrodes is divided as division voltages between every two neighboring serial cells. Figs. 1 and 5 illustrate that when the concentration of the electrolyte 51 is controlled at PH value being 12, the controlled current density is 1 Amp/cm². The electrodes 20 each have an area 25 cm² such that the current value shown on the DC power supplier 49 is 25Amp with the voltage value 11.5Volts. For the division voltages of the eight serial electrodes 20, the electrolyzing division voltage between every two neighboring electrodes 20 is 11.5Volts/7=1.643Volts, the electrolyzing efficiency for the single serial division voltage is 90% (1.48/1.643=0.9), and the production rate for the mixture gas is 94.7 liter/hr. The preceding figures are much greater than the conventional art.

Figs. 1 and 4 show that the carbon paper substrate 23 with ultrahigh surface contact and the micro metal particles coated on the carbon paper substrate 23 with extremely high catalytic reaction electrolyzes the water molecules to produce the hydrogen and the oxygen; alternatively, the pulse-width-module power supplier 49 is utilized to stimulate the water molecules between the electrodes 20 with demodulation for the water molecules constituting the resonant electrolysis in the process of the electrolyzing such that the high electrolyzing efficiency being over 90% can be reached advantageously.

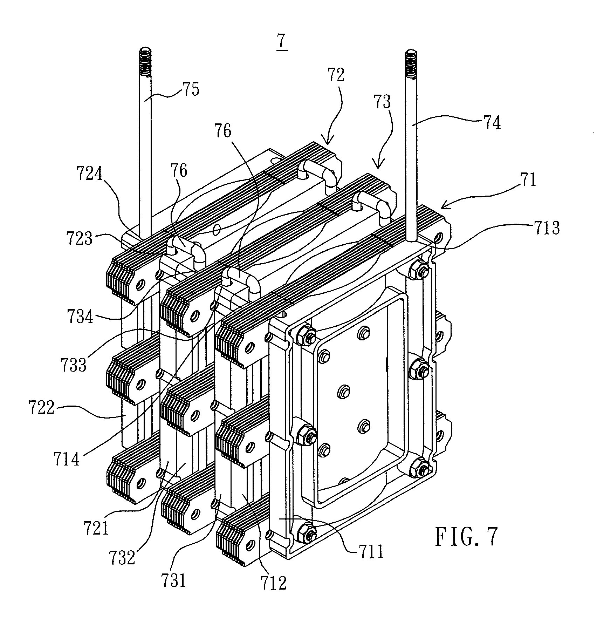

Referring to Figs. 7, a electrolyzing structure 7 in the third embodiment according to the present invention includes a plurality of serial cells 71, 72, 73, a first conductor 74, a second conductor 75 and a plurality of "U"-shaped third conductors 76. The serial cells 71, 72, 73 provide a structure of serial elongation in which the two serial cells 71, 72 are disposed at the two outermost sides of the electrolyzing structure 7.

The structures of the serial cells 71, 72, 73 are the same as the electrode serial cell 3 shown in Fig. 3. The serial cells 71, 72, 73 each have a first frame 711, 721, 731 and a second frame 712, 722, 732 respectively; the first frames 711, 721, 731 have a first groove 713, 723, 733 respectively; the second frames 712, 722, 732 have a second groove 714, 724, 734 respectively; The serial cell 73 is disposed between the two serial cells 71, 72; the first frame 731 and the second frame 732 press against the second frame 712 and the first frame 721.

The first groove 713 is joined to the first conductor 74; the second groove 724 is joined to the second conductor 75; the third conductor 76 is joined to the second groove 714 and the first groove 733; Further, the third conductor 76 is joined to the second groove 734, the first groove 723; therefore, the serial cells 71, 72, 73 electrically connect with each other sequentially. When the first conductor 74 and the second conductor 75 are connected to the positive pole and the negative pole of a DC power supplier, the serial cells 71, 72, 73 perform the electrolysis to the electrolyte.

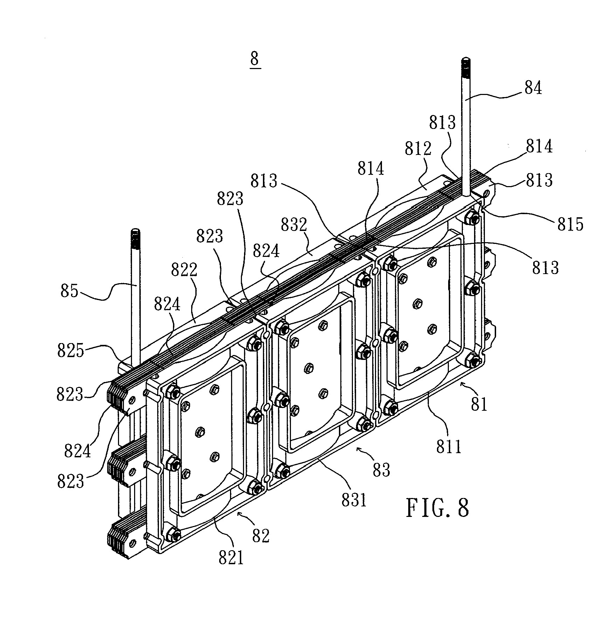

Referring to Fig. 8, an electrolyzing structure provided in the fourth embodiment according to the present invention includes a plurality of serial cells 81, 82, 83, a first conductor 84 and a second conductor 85. The serial cells 81, 82, 83 constitute a structure of parallel extension with the two serial cells 81, 82 are disposed at the two outermost sides laterally.

The serial cells 81, 82, 83 each have a first frame 811, 821, 831 and a second frame 812, 822, 832, respectively; a plurality of metal sheets 813 and a plurality of insulation sheets 824 are disposed between the two lateral sides of both the first frame 811 and the second frame 812 respectively. The groove 815 of the first frame 811 is joined to the first conductor 84; the groove 825 of the second frame 822 is joined to the second conductor 85.

The structural arrangement for the serial cells 81, 82, 83 is the same as the serial cell 3 shown in Fig. 3, but the two first frames 811, 831 contact with the same metal sheets 813, and the two second frames 812, 832 contact the same metal sheets 813 too; the two second frames 822, 832 contact with the same metal sheets 823, and the two second frames 822, 832 contact the same metal sheets 823; therefore, the serial cells 81, 82, 83 at the ends of the first frames 811, 821, 831 electrically connect with each other sequentially with the same potential, and at the ends of the second frames 812, 822, 832 electrically connect with each other sequentially with the same potential too such that the areas of the electrodes are expanded. When the first and second conductors 84, 85 are connected to the positive and negative poles respectively, the serial cells 81, 82, 83 are capable of performing the electrolysis to the electrolyte at the same time.

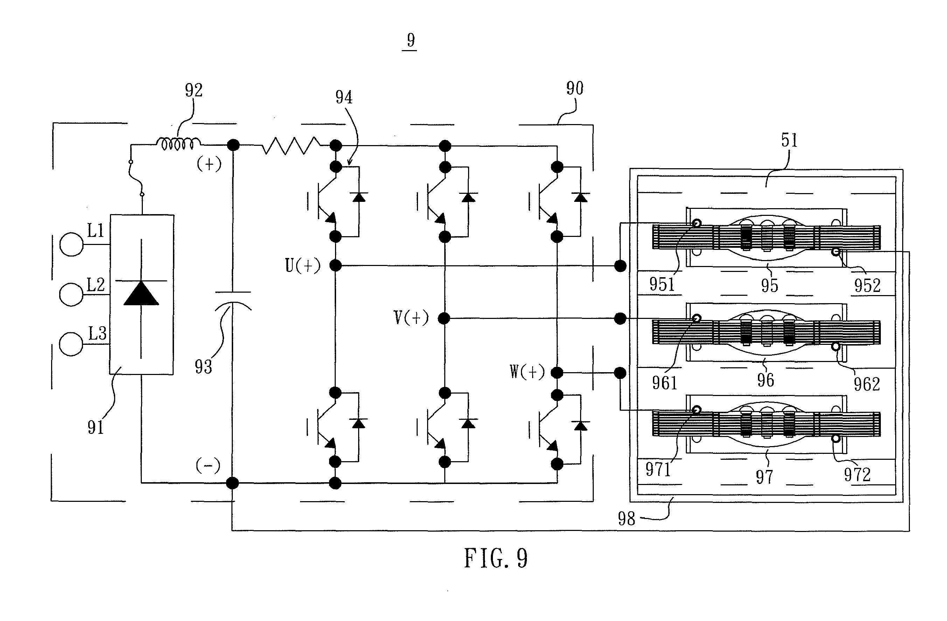

Referring to Fig. 9 in company with Figs. 1 and 2, a hydrogen-oxygen electrolyzing device 9 provided in the second embodiment according to the present invention includes an AC frequency-changeable driver 90, three electrolyzing structures 95, 96, 97, a first container 98, a second container 42 (shown in Figs. 1 and 2, and shown in Fig. 9), a controller 43, a first level sensor 44, a pump 45, a gas pressure sensor 46, a second level sensor 47 and an anti backfire valve 48. The hydrogen-oxygen electrolyzing device 9 is coupled to the three-phase power (the utility power) such that the AC frequency-changeable driver 90 and the three electrolyzing structures 95, 96, 97 are required. The hydrogen-oxygen electrolyzing device 9 shown in Fig. 9 almost the same as the DC hydrogen-oxygen electrolyzing device 1 shown in Figs. 1 and 2; the only differences are the DC power supplier 49 and an electrolyzing structure 2 provided by the hydrogen-oxygen electrolyzing device 1. The three electrolyzing structures 95, 96, 97 can be the electrolyzing structures 2, 7, 8 shown in Figs. 6, 7 and 8 respectively.

Referring to Fig. 9 again, the AC frequency-changeable driver 90 can be the conventional AC motor driver with changeable frequency and includes a three-phase full wave rectifier 91, an inductor 92, a capacitor 93 and six insulated gate bipolar transistors (IGBT). A three-phase power is input to the three-phase full wave rectifier 91 for being rectified with the three-phase full wave rectifier 91, a DC voltage is output to both the inductor 92 and the capacitor 93 from the three-phase full wave rectifier 91, and a DC voltage approximately without ripples is obtained before passing through the six IGBT 94. Finally, the current with three positive output ends U(+), V(+) and W(+) is output under six control procedures of the six IGBT circularly.

It can be seen in Fig. 9 that the three positive output ends U(+), V(+) and W(+) of the AC frequency-changeable driver 90 are coupled to the first conductors 951, 961, 971 of the three electrolyzing structures 95, 96, 97 respectively; the negative end of the AC frequency-changeable driver 90 is coupled to the second conductors 952, 962, 972 respectively; the three electrolyzing structures 95, 96, 97 are disposed as "Y"-shaped arrangement; the first container 98 contains the three electrolyzing structures 95, 96, 97, but the first conductors 951, 961, 971 and the second conductors 952, 962, 972 extend outward the first container 98.

The three positive output ends U(+), V(+) and W(+) of the AC frequency-changeable driver 90 controls the DC power supply to the first conductors 951, 961, 971 of the three electrolyzing structures 95, 96, 97 alternately such that the electrolyte 51 in the first container 98 is capable of being electrolyzed and produces the hydrogen and the oxygen.

The AC frequency changeable driver 90 in the second embodiment according to the present invention accomplishes the following achievements:

(1) It is adaptable to the conventional frequency-changeable type power supplier and the three-phase electricity from the power company for processing the electrolysis.

(2)It provides the changeable frequency to control the output of hydrogen-oxygen electrolysis.

(3)The electrolyzing efficiency of the electrolyzing structure is enhanced.

The carbon paper substrate with good properties such as electrical conductivity, thermal conductivity, porosity, permeability, hydrophicity and hydrophobility is employed to increase the maximum surface contact between the water molecules and the electrodes, the catalyst and the gas expelling capability, to prevent accumulation of the produced hydrogen and oxygen and to even the currents of the electrodes.

The outer surfaces of the carbon paper substrate are coated with the metal or the metal compound with the electroless plating, the sputtering, the physical vapor deposition (PVD), the chemical vapor deposition (CVD) or the micro/nano powder sintering such that the two opposite catalyst layers are formed on the fiber surface for changing the material of the surface of the carbon paper substrate.

The two material changed layers (the first metal layer and the second metal layer) on the surface of the carbon paper substrate each can be a single layer or double layers, and gradient of the respective material change layer can be platinum, rhodium, cobalt, iron and palladium or the compounds thereof.

The pulse-width-module power supplier stimulates the water molecules between the electrodes with demodulation for the water molecules forming the resonant electrolysis in the process of electrolyzing so as to enhance the electrolyzing efficiency. The piezoelectric material sheet such as the quartz slice or the ceramic piezoelectric sheet is disposed in the gap between every two electrodes for disturbing the electrolyte evenly and reinforcing the fluidity of the produced gases for enhancing effectiveness of the electrolysis greatly.

The electrolyte used in the present invention can be the alkaline solution such as the sodium hydroxide solution or the potassium hydroxide solution with a molar concentration in a range of 0.001M∼0.1M. The acid-base value is in a range of PH=11∼13.

While the invention has been described with referencing to preferred embodiments thereof, it is to be understood that modifications or variations may be easily made without departing from the spirit of this invention defined by the appended claims.

## Claims

1. A hydrogen-oxygen electrolyzing device for generating hydrogen and oxygen with electrolytic solution comprising:
a first container providing a receiving trough for containing the electrolyte; and
at least an electrolyzing structure;
wherein said electrolyzing structure further comprises:
at least a serial cell being disposed in said receiving trough and further comprising a plurality of electrodes with a gap between every two neighboring ones of said electrodes;
a first conductor; and
a second conductor;
wherein said first conductor and said second conductor electrically connect with the two outermost ones of said electrodes;
**characterized in that** each of said electrodes is a carbon paper electrode with material changed outer surfaces, and further comprises:
a carbon paper substrate having a first surface and a second surface;
a first metal layer being joined to said first surface; and
a second metal layer being joined to said second surface.

2. The hydrogen-oxygen electrolyzing device as defined in claim 1, wherein said first and second metal layers are made with a plurality of micro metal particles respectively.

3. The hydrogen-oxygen electrolyzing device as defined in claim 2 further comprises a piezoelectric slice, which is disposed between said electrodes for disturbing the electrolyte uniformly for reinforcing the fluidity of the hydrogen and the oxygen and enhancing effectiveness of electrolysis.

4. The hydrogen-oxygen electrolyzing device as defined in claim 3, wherein said first metal layer and said second metal layer each have a first inner metal layer, a second inner metal layer, a first outer metal layer and a second outer metal layer respectively; said first inner metal layer is disposed between said first surface and said first outer metal layer; said second inner metal layer is disposed between said second surface and said second metal layer; said metal particles at said first inner metal layer provides a density greater than that at said first outer metal layer; said metal particles at said second inner metal layer provides a density greater than that at said second outer metal layer; wherein the gradient of the respective micro metal particles is one of nickel, nickel compound, platinum, platinum compound, rhodium, rhodium compound, cobalt, cobalt compound, iron, iron compound, palladium and palladium compound, or mixtures of the preceding metals or metal compounds.

5. The hydrogen-oxygen electrolyzing device as defined in claim 4, wherein said series component further comprises a plurality of insulation rods and a plurality of insulation pads; said electrodes have a plurality of holes being pierced by said insulation rods; each of said insulation rods passes through one of said insulation pads disposed between every two neighboring ones of said electrodes respectively; the respective insulation rod has a cap part pressing against one of the two outermost ones of said electrodes and an end part extending outward the outer side of the other one of said outermost electrodes is joined to another one of said insulation pads for a constant gap is formed between said every two neighboring electrodes; said series component further comprises a first frame, a second frame, a plurality of metal sheets and a plurality of insulation sheets, wherein said first frame, said second frame, said metal sheets and said insulation sheets have a plurality holes corresponding to each other; said holes are pierced by an insulation bolt respectively with an end of said bolt engaging with an insulation nut for said insulation sheets being clamped between said first frame and second frame; at least one of said metal sheets is disposed between two outermost ones of said metal sheets; a lateral side of the respective metal sheet contacts with the outer lateral sides of the two outermost electrodes; a lateral side of the respective insulation sheet is disposed between every two neighboring electrodes such that the edges of said electrodes are secured in a state of being parallel to each other.

6. The hydrogen-oxygen electrolyzing device as defined in claim 5, wherein said first container further comprises a first main body and a first covering lid; said first main body has a first receiving trough being joined to said covering lid air-tightly for obtaining an airtight space in said first receiving trough; said first covering lid has a first gas outlet; said first conductor and said second conductor pass through said first covering lid with an upper end thereof extending outward said covering lid respectively; the bottom of said first main body has a first liquid inlet communicating with said first receiving trough; said covering lid has a second liquid inlet, which is sealed with a sealing member normally, for a supplementary liquid being added into said first receiving trough at the time of said sealing member being opened; said first level sensor further comprises a high level sensing unit and a low level sensing unit for detecting the level height of said electrolyte.

7. The hydrogen-oxygen electrolyzing device as defined in claim 6 further comprises a second container, a pump, a controller , a fourth external pipe and an anti backfire valve, wherein said second container further comprises a second main body, which has a second receiving trough and a first liquid outlet communicating with said second receiving trough, and a second covering lid being joined to said second main body air-tightly for forming an airtight space in said second receiving trough; wherein said second covering lid has an gas intake port, a second gas outlet and at least a third liquid inlet, and said third liquid inlet, which is sealed with a second sealing member normally, for the supplementary liquid being added into said second receiving trough at the time of said second sealing member being opened; an inner pipe is joined to said second covering lid and disposed inside said second receiving trough to communicate with said gas intake port; a first external pipe is disposed with two ends thereof being joined to said first main body and said pump to communicate with said first main body and said pump respectively; a second external pipe is disposed with two ends thereof being joined to said second main body and said pump to communicate with said pump and said first liquid outlet; a third external pipe is disposed with two ends thereof connecting with said first covering lid and said second covering lid to communicate said first gas outlet and said gas intake port; said controller electrically connecting with said first level sensor and said pump, wherein said controller is capable of emitting a control signal to stop or start said pump when a sensing signal emitted by said first level sensor for indicating the liquid level in said first receiving trough being at the high or low level is detected by said controller such that the supplementary liquid stops or starts entering said first receiving trough for the level of said electrolyte in said receiving trough maintaining at a preset range; said second covering lid is joined to a gas pressure sensor for detecting the gas pressure in said second receiving trough; said controller electrically connects with said gas sensor and said DC power supplier respectively to emit a control signal to stop said DC power supplier outputting voltage to said first and second conductors at the time of said gas pressure sensor issuing a message regarding the gas pressure exceeding a preset value being detected by said controller such that said electrodes stop electrolyzing the electrolytic solution and the mixture of hydrogen and oxygen is not generated any more; said second main body is joined to a second level sensor for detecting the liquid level of the supplementary liquid in said second receiving trough; the lower end of said internal pipe is disposed at an elevation lower than that of said second level sensor; said fourth external pipe with two end; said fourth external pipes connect with said second covering lid and said anti backfire valve with the two ends thereof respectively.

8. The hydrogen-oxygen electrolyzing device as defined in claim 7, wherein said electrolyzing structure provides said serial cell; said first and second frames have a groove corresponding to each other; said first conductor fits with said groove in said first frame; said second conductor fits with said groove in said second frame; said first conductor contacts with said metal sheets near said first frame; said second conductor contacts with said metal sheets near said second frame; wherein the edges of said two outermost electrodes are clamped between one of said metal sheet and one of said insulation sheets neighboring said outermost electrodes respectively, and the edges of the remaining electrodes are clamped between every two neighboring insulation sheets.

9. The hydrogen-oxygen electrolyzing device as defined in claim 7, wherein said electrolyzing structure provides a plurality of said serial cells to form a structure of serial elongation with said serial cells electrically connecting with each other; said first frame has a first groove and said second frame has a second groove corresponding to each other respectively; said first conductor fits with said first groove of one of the two outermost ones of the first frames and contacts with one of said metal sheets next to said outermost frame; said second conductor fits with said second groove of said second frame; said first conductor contacts with said metal sheets near said first frame; said second conductor fits with said second groove of the other outermost series component and contacts with one of said metal sheets near said second frame.; said first groove and said second groove at every neighboring first frame and second frame corresponding to each other for fitting a "U"-shaped third conductor respectively.

10. The hydrogen-oxygen electrolyzing device as defined in claim 7, wherein said electrolyzing structure provides a plurality of said serial cells to form a structure of parallel extension with the same one of said metal sheets being disposed between and contacting with every two neighboring first frames and every two neighboring second frames; said first frame and said second frame each have a groove corresponding to each other; said first conductor fits with said first groove of one of the two outermost ones of the first frames and contacts with one of said metal sheets next to said outermost frame; said second conductor fits with said second groove of said second frame; said first conductor contacts with said metal sheets near said first frame; said second conductor fits with said second groove of the other outermost serial cell and contacts with one of said metal sheets near said second frame; wherein the two lateral sides of the first and second frames of each of said serial cells contact said metal sheets and said insulation sheets respectively; the same one of said metal sheets or said insulation sheets is disposed between and contacts every two neighboring ones of said first frames; the same one of said metal sheets or said insulation sheets is disposed between and contacts every two neighboring ones of said second frames; said first conductor and said second conductor contact said outermost serial cells respectively.

11. The hydrogen-oxygen electrolyzing device as defined in any one of claim 1 to claim 10, further comprises a pulse type DC power supplier with a positive pole and a negative pole thereof electrically connecting with said first conductor and said second conductor such that a pulse type DC power from said power supplier is supplied to said electrodes to stimulate water molecules between said electrodes with demodulation of said pulse type DC power such that a resonant electrolysis occurs with the water molecules in the process of electrolyzing to enhance the electrolyzing efficiency.

12. The hydrogen-oxygen electrolyzing device as defined in any one of claim 1 to claim 10, further comprises three electrolyzing structures and an AC frequency- changeable driver; wherein said AC frequency-changeable driver has three positive output ends coupling the respective first conductor of said electrolyzing structures, and three negative output ends coupling the respective second conductor of said electrolyzing structures so as to form a "Y"-shaped arrangement such that said three positive output ends control alternate DC power supplying to said respective first conductor and said three electrolyzing structures electrolyze the electrolyte in said first container for generating the hydrogen and the oxygen; said AC frequency-changeable driver further comprises a three-phase full wave rectifier, a conductor, a capacitor and six insulated gate bipolar transistors (IGBT), which couple with each other, such that a three-phase power source is input to said three-phase full wave rectifier to be rectified and output DC voltage to said inductor and said capacitor respectively, said DC voltage is filtered with said inductor and said capacitor before passing said six insulated gate bipolar transistors, and said six insulated gate bipolar transistors circularly control the current outputting via said three positive output ends.

13. A carbon paper electrode with both outer surfaces being changed in material for a hydrogen-oxygen electrolyzing device being capable of producing hydrogen and oxygen comprising:
a carbon paper substrate having a first surface and a second surface being disposed oppositely to each other;
a first metal layer being joined to said first surface; and
a second metal layer being joined to said second surface.

14. The carbon paper electrode with both outer surfaces being changed in material as defined in claim 13, wherein said first and second metal layers are made with a plurality of micro metal particles respectively.

15. The carbon paper electrode with both outer surfaces being changed in material as defined in claim 14, wherein said first metal layer and said second metal layer each have a first inner metal layer, a second inner metal layer, a first outer metal layer and a second outer metal layer respectively; said first inner metal layer is disposed between said first surface and said first outer metal layer; said second inner metal layer is disposed between said second surface and said second metal layer; wherein said metal particles at said first inner metal layer provides a density greater than that at said first outer metal layer; said metal particles at said second inner metal layer provides a density greater than that at said second outer metal layer.; wherein the gradient of the respective micro metal particle is one of nickel, nickel compound, platinum, platinum compound, rhodium, rhodium compound, cobalt, cobalt compound, iron, iron compound, palladium and palladium compound, or one of mixtures of the preceding metals or metal compounds.
